# DEMANDE DE BREVET EUROPEEN

(11) **EP 4 257 299 A1**
(43) Date de publication de la demande: **11.10.2023**
(21) Numéro de dépôt: 23158627.2
(22) Date de dépôt: 24.02.2023
(51) Int. Cl.: B25J 5/00, B25J 11/00, B25J 19/00, B25H 5/00, G05D 1/02, B25F 5/00, B25H 3/00

(54) **ROBOT MOTORISÉ POUVANT TRANSFÉRER DE L'ÉNERGIE ÉLECTRIQUE À UN APPAREIL ÉLECTRIQUE EXTERNE**

(30) Priorité: 05.04.2022 FR 2203081
(71) Demandeur: ETESIA, 67160 Wissembourg (FR)
(72) Inventeur: SCHMITT, Freddy, 67250 LAMPERTSLOCH (FR)
(74) Mandataire: Hege, Frédéric

(57) **Abrégé**

La présente invention concerne un robot motorisé apte à se déplacer de façon autonome et comportant un corps (1) dans lequel se trouve une batterie (2), et un connecteur électrique (3), ledit connecteur électrique étant relié audit corps par un câble (4) de façon à pouvoir transférer de l'énergie électrique stockée dans la batterie (2) vers un appareil électrique (5) externe audit robot.

La présente invention concerne également un ensemble comprenant un robot selon l'invention, et un appareil électrique (5) externe audit robot.

La présente invention concerne enfin un procédé d'utilisation d'un robot selon l'invention.

## Description

La présente invention se situe dans le domaine des appareils à alimentation électrique. Elle concerne plus particulièrement un robot motorisé apte à alimenter un appareil électrique externe.

Lors de leur utilisation, les appareils électriques sont habituellement alimentés soit par un réseau électrique, au moyen d'un câble d'alimentation les reliant audit réseau, soit par une batterie interne.

Le problème des appareils électriques alimentés par le réseau est la faible mobilité dont bénéficie l'utilisateur. Celui-ci doit brancher l'appareil sur une prise électrique, et ne peut s'éloigner de la prise que selon la distance permise par la longueur du câble d'alimentation. En outre la longueur de câble est limitée par la résistance propre du câble.

Les appareils électriques à batterie interne permettent d'éviter ces inconvénients. Ils connaissent par contre des limitations importantes en termes de durée maximale d'utilisation, leur batterie interne ayant une capacité limitée, et de puissance, une batterie interne ne pouvant habituellement fournir qu'une puissance réduite à l'appareil électrique par rapport au réseau électrique.

Pour répondre à ces problématiques, le document FR2862558 propose un appareil électrique relié par un câble d'alimentaion à une batterie externe portée par l'utilisateur autour de la taille. Dans d'autres modes de réalisation elle peut aussi être portée dans le dos. L'utilisateur bénéficie par ce moyen d'une bonne mobilité, et d'une autonomie et puissance accrues pour l'appareil électrique. Toutefois cette solution n'est pas satisfaisante, elle provoque des pathologies du dos, et il existe donc un besoin de faciliter encore l'utilisation de l'appareil électrique.

Un objet de la présente invention est de faciliter l'utilisation d'un appareil électrique manuel.

Un autre objet de la présente invention est de permettre l'utilisation d'un appareil électrique de façon mobile, avec une durée d'utilisation maximale et une puissance électrique importantes.

La présente invention a pour objet de répondre au moins en partie aux objets précités en proposant de disposer un connecteur électrique sur un robot motorisé apte à se déplacer de manière autonome.

A cet effet, elle propose un robot motorisé apte à se déplacer de façon autonome et comportant un corps dans lequel se trouve une batterie, et un connecteur électrique, ledit connecteur électrique étant relié audit corps par un câble de façon à pouvoir transférer de l'énergie électrique stockée dans la batterie vers un appareil électrique externe audit robot, ledit connecteur électrique étant mobile par rapport audit corps.

Grâce à ces dispositions, un moyen d'alimentation par câble de l'appareil électrique peut se déplacer de façon autonome, ce qui permet l'utilisation d'un appareil électrique de façon mobile, avec une durée d'utilisation maximale et une puissance électrique importantes, et avec une masse minimale à porter par l'utilisateur ; l'autonomie de déplacement du robot permet une grande flexibilité d'utilisation, la mobilité du connecteur électrique permettant à l'utilisateur une plus grande liberté de position par rapport au robot, notamment de se tenir à plus grande distance ou de n'importe quel côté du robot.

Selon d'autres caractéristiques :
- ledit robot peut être apte à se déplacer de façon autonome de manière à suivre ou à précéder un utilisateur, ce qui permet à l'utilisateur d'utiliser l'appareil électrique branché au robot et de se déplacer, sans avoir à se soucier de la position du robot,
- ledit robot peut être apte à se déplacer de façon autonome de manière à rejoindre un utilisateur, ou un point cartographié ce qui facilite l'utilisation du robot, par exemple dans le cas où l'utilisateur utilise l'appareil électrique alimenté par sa batterie propre, et que ladite batterie propre arrive en fin de charge,
- ledit robot peut comporter un enrouleur de câble, ledit câble pouvant être apte à être enroulé sur ledit enrouleur de câble, l'enrouleur de câble pouvant être rotatif à 360° autour d'un axe de rotation vertical, l'utilisateur pouvant ainsi utiliser l'appareil électrique en se trouvant de n'importe quel côté du robot, tout en se tenant à une distance maximale du robot constante,
- ledit connecteur électrique peut être apte à être couplé à une fiche électrique destinée à être insérée dans une prise d'un réseau électrique, ce qui permet d'utiliser un appareil électrique ayant une fiche électrique standardisée,
- ledit robot peut comporter un moyen de chargement configuré pour transporter une charge externe audit robot, ce qui augmente les possibilités d'usage dudit robot, l'appareil électrique par exemple pouvant être transporté par le robot lorsqu'il n'est pas utilisé,
- ledit robot peut comporter un outil, ce qui augmente ses capacités d'usage.

La présente invention concerne également un ensemble comprenant un robot selon l'invention, et un appareil électrique externe audit robot, ledit appareil électrique étant alimenté en électricité par l'intermédiaire dudit connecteur électrique.

Grâce à ces dispositions, un moyen d'alimentation par câble de l'appareil électrique peut se déplacer de façon autonome, ce qui permet l'utilisation d'un appareil électrique de façon mobile, avec une durée d'utilisation maximale et une puissance électrique importantes, l'autonomie de déplacement du robot permettant une grande flexibilité d'utilisation.

La présente invention concerne enfin un procédé d'utilisation d'un robot selon l'invention par un utilisateur, comportant les étapes suivantes :
- le cas échéant, commande au robot de rejoindre un utilisateur, ou un point cartographié, puis déplacement autonome du robot de façon à rejoindre l'utilisateur, respectivement le point cartographié
- branchement par l'utilisateur audit connecteur électrique d'un appareil électrique externe audit robot,
- utilisation manuelle dudit appareil électrique par l'utilisateur.

Grâce à ces dispositions, un moyen d'alimentation par câble de l'appareil électrique peut se déplacer de façon autonome, ce qui permet l'utilisation d'un appareil électrique de façon mobile, avec une durée d'utilisation maximale et une puissance électrique importantes, et avec une masse minimale à porter par l'utilisateur ; l'autonomie de déplacement du robot permettant une grande flexibilité d'utilisation.

Selon d'autres caractéristiques :
- ledit procédé peut comporter en outre les étapes suivantes :
   - commande au robot de suivre ou précéder l'utilisateur,
   - déplacement à pieds de l'utilisateur,
   - déplacement du robot de manière autonome de façon à suivre ou précéder l'utilisateur,
   ce qui permet à l'utilisateur d'utiliser l'appareil électrique branché au robot et de se déplacer, sans avoir à se soucier de la position du robot, et donc sans avoir à se soucier de la position du pack d'énergie.

La présente invention sera mieux comprise à la lecture de la description détaillée qui fait suite, en référence aux figures annexées dans lesquelles :

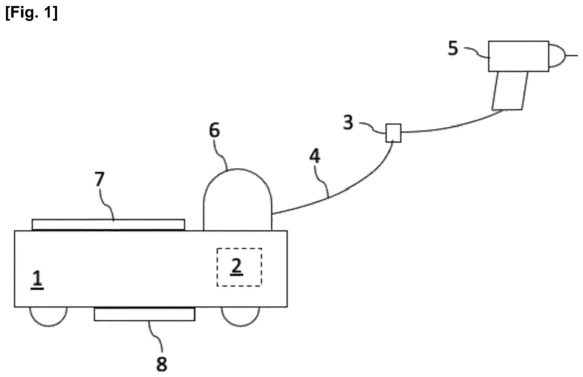

[Fig. 1] La fig. 1 est une vue schématique d'un ensemble selon l'invention.

Le robot selon l'invention est apte à se déplacer de façon autonome. Par déplacement autonome, on entend un déplacement dans lequel le robot prend des décisions de déplacement de façon autonome, par exemple éviter un obstacle qu'il aura détecté grâce à un de ses capteurs. Différents types de déplacement autonome existent, et le robot selon l'invention est capable de se déplacer selon un ou plusieurs types de déplacement autonome différents.

Un de ces types est un déplacement du robot seul en vue de parcourir l'entièreté d'une zone. Il peut se déplacer sans aucune connaissance de la zone dans laquelle il se trouve, de manière aléatoire. En alternative, il peut se déplacer de façon méthodique, afin de générer une carte de la zone dans laquelle il se trouve, carte qu'il pourra utiliser pour accomplir ses tâches suivantes de façon plus efficaces, notamment trouver le chemin le plus court entre deux endroits. Le robot évolue dans une zone, qui peut être délimitée de différentes manières. Les limites peuvent comporter des obstacles physiques qu'il ne peut pas franchir, par exemple des murs délimitant une propriété. Les limites peuvent également comporter des obstacles logiques, par exemple un fil enterré détectable par le robot, le robot étant programmé pour ne pas aller au-delà du fil.

Un autre type de déplacement autonome est un déplacement du robot seul en vue de rejoindre un lieu cible. Ce lieu cible peut être repéré sur une carte générée par le robot ou qui lui a été fournie. En alternative, ce lieu cible peut être détectable par le robot, par exemple en émettant un signal particulier. Le robot peut alors chercher la source du signal pour rejoindre le lieu cible.

Un autre type de déplacement autonome est un déplacement du robot dans lequel il accompagne un utilisateur. Le robot détermine à tout moment la position de l'utilisateur, afin par exemple de le suivre ou de le précéder, ou encore de se déplacer à côté de lui. Ce type de robot est connu de l'art antérieur, voir par exemple le document KR101014531.

Le robot selon l'invention comporte un corps 1, dans lequel se trouve un moyen de stockage d'énergie, notamment une batterie 2. Le robot comporte encore un connecteur électrique 3 relié au corps 1 par un câble 4. Le câble 4 et le connecteur électrique 3 permettent de transférer de l'énergie électrique stockée dans la batterie vers un appareil électrique 5 externe audit robot. L'appareil électrique 5 est donc de préférence un appareil alimenté par un câble électrique. Le câble 4 permet que le connecteur électrique 3 soit mobile par rapport au corps 1. Ceci permet à l'utilisateur de l'appareil électrique 5 externe de se tenir à une distance plus grande du robot, ou encore de plus facilement se tenir d'un côté ou de l'autre du robot.

Le connecteur électrique 3 est de préférence apte à être couplé à une fiche électrique destinée à être insérée dans une prise d'un réseau électrique. Ainsi un appareil électrique 5 compatible avec le réseau électrique est compatible avec le robot et peut être utilisé dans les deux configurations. Ce réseau électrique est par exemple le réseau électrique domestique standard du pays dans lequel le robot est utilisé. Il peut par exemple s'agir du réseau de tension 230V et de fréquence 50Hz. Le robot peut comporter un moyen de transformer un courant de basse tension continue venant de la batterie 2 en un courant alternatif, par exemple de tension 230V et de fréquence 50Hz, apte à alimenter l'appareil électrique 5 par l'intermédiaire du câble 4 et du connecteur électrique 3.

Dans le cadre de la présente invention, un appareil électrique externe au robot est un appareil à alimentation électrique qui peut fonctionner sans le robot, par exemple en étant branché au réseau électrique. L'appareil électrique 5 peut être tout appareil d'usage professionnel ou domestique. Il peut s'agir par exemple d'une perceuse, d'une visseuse, d'un scarificateur, d'un taille-haie, d'un moyen d'éclairage destiné à être porté à la main, ou encore d'une scie circulaire.

L'appareil électrique 5 est de préférence un appareil manuel, c'est-à-dire que l'utilisateur l'utilise en le tenant dans ses mains, par opposition par exemple à un appareil autonome ou commandé à distance.

L'invention permet donc à l'utilisateur du robot de bénéficier d'une alimentation électrique pour son appareil électrique 5, cette alimentation étant mobile et se déplaçant de façon autonome.

Le câble 4 a une longueur de préférence comprise entre 4 et 6m, par exemple 5m. Ceci permet à l'utilisateur de s'éloigner un peu du robot sans nécessiter un déplacement du robot, tout en ayant un câble suffisamment léger.

Le robot peut être apte à un ou plusieurs types de déplacement autonomes, chacun permettant d'obtenir différents modes d'utilisation.

Le robot peut par exemple communiquer avec une télécommande, par le moyen duquel l'utilisateur peut commander au robot de se déplacer. Une telle commande peut consister en un déplacement jusqu'à un endroit repéré sur une carte. Une telle commande peut encore consister en un déplacement jusqu'à la télécommande, qui peut alors émettre un signal pour être détectable par le robot.

Dans un mode de réalisation préféré de l'invention, le robot est apte à suivre ou précéder l'utilisateur. Ainsi l'utilisateur peut utiliser l'appareil électrique 5 en se déplaçant, et le robot se déplace de façon à rester à proximité de l'utilisateur, assurant une alimentation électrique en continu à l'appareil électrique 5. Le robot est de préférence capable de reconnaître l'utilisateur. Lorsqu'il suit ou précède l'utilisateur, la distance entre l'utilisateur et le robot peut être par exemple comprise entre 0,3 et 1,5m. Cette distance est de préférence réglable, afin d'être mieux adaptable au mode d'utilisation de l'utilisateur.

Le robot peut être apte à rejoindre l'utilisateur. L'utilisateur peut par exermple appeler le robot à le rejoindre par l'intermédiaire d'une télécommande, qui peut être intégrée à une applicaiton pour smartphone. Le robot est de préférence apte à utiliser une carte des lieux qu'il a lui-même créée et affinée lors de ses déplacements précédents, afin d'optimiser son déplacement jusqu'à l'utilisateur.

Le robot selon l'invention comporte de préférence un enrouleur de câble 6, autour duquel le câble 4 peut être enroulé. L'enrouleur de câble 6 est rotatif à 360° autour d'un axe de rotation vertical. Ainsi lorsque l'utilisateur utilise un appareil électrique 5 branché sur le connecteur électrique 3, il peut se trouver plus facilement de n'importe quel côté du robot. En effet de quelque côté qu'il se trouve, il bénéficie d'une longueur de câble constante et égale à la somme de la longueur du câble 4 et du câble d"alimentation de l'appareil électrique 5. Dans le cas où le robot est apte à suivre ou précéder l'utilisateur, l'utilisateur peut ainsi utiliser l'appareil électrique 5 sans se soucier de la position du robot.

Le robot selon l'invention peut comporter un moyen de chargement 7, situé de préférence sur sa partie supérieure. Le moyen de chargement 7 est apte à transporter une charge externe audit robot, par exemple l'appareil électrique 5 lorsqu'il n'est pas utilisé, ou un autre appareil, ou toute autre charge. L'utilisateur peut ainsi faire porter au robot une charge lourde ou encombrante, ce qui lui permet de garder les mains libres pour d'autres tâches, et de ne pas se fatiguer. Le moyen de chargement 7 est par exemple apte à transporter une charge pesant jusqu'à 20 kg et peut comprendre un détecteur de surcharge.

Le robot peut enfin comporter un outil 8. Le robot est de préférence apte à utiliser l'outil 8 de façon autonome. L'outil 8 est par exemple un outil de tonte, un scarificateur, un émousseur, un épandeur, un souffleur, une balayeuse ou encore une fraise à neige. Le robot peut être compatible avec un ou plusieurs de ces outils 8 qui sont alors interchangeables. Le robot peut alors être facilement modifié en changeant son outil 8, ce qui lui permet d'accomplir diverses tâches. Le robot peut comprendre une fonction de reconnaissance de l'outil 8, et adapter le couple transmis en fonction du type d'outil 8. Le robot peut aussi comporter des capteurs environnementaux, par exemple de pluie et/ou de luminosité, et prendre en compte les mesures de ces capteurs pour adapter la vitesse du couple transmis à l'outil 8.

Le robot selon l'invention, en plus de sa vocation première qui est d'assurer l'alimentation électrique d'un appareil électrique 5 externe, peut dans certains modes de réalisation être utilisé pour d'autres tâches telles que des tâches de jardinage, grâce à l'outil 8, ou des tâches de transport de charges, grâce au moyen de chargement 7.

La présente invention concerne également un ensemble comprenant un robot selon l'invention et un appareil électrique externe audit robot, ledit appareil électrique 5 étant alimenté en électricité par l'intermédiaire dudit connecteur électrique.

Le robot selon l'invention peut être utilisé selon un procédé comportant les étapes suivantes :
- le cas échéant, commande au robot de rejoindre un utilisateur ou un point défini sur une carte, puis déplacement autonome du robot de façon à rejoindre l'utilisateur, respectivement ledit point défini sur une carte,
- branchement par l'utilisateur audit connecteur électrique 3 d'un appareil électrique 5 externe audit robot,
- utilisation manuelle dudit appareil électrique 5 par l'utilisateur.

Dans un mode préféré de réalisation du procédé ci-dessus, il comporte en outre les étapes suivantes :
- commande au robot de suivre ou précéder l'utilisateur,
- déplacement à pieds de l'utilisateur,
- déplacement du robot de manière autonome de façon à suivre ou précéder l'utilisateur.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Robot motorisé apte à se déplacer de façon autonome et comportant un corps (1) dans lequel se trouve une batterie (2), et un connecteur électrique (3), ledit connecteur électrique (3) étant relié audit corps par un câble (4) de façon à pouvoir transférer de l'énergie électrique stockée dans la batterie (2) vers un appareil électrique (5) externe audit robot, ledit connecteur électrique (3) étant mobile par rapport audit corps (1).

2. Robot motorisé selon la revendication précédente, apte à se déplacer de façon autonome de manière à suivre ou à précéder un utilisateur.

3. Robot motorisé selon l'une des revendications précédentes, apte à se déplacer de façon autonome de manière à rejoindre un utilisateur, ou un point cartographié.

4. Robot motorisé selon l'une des revendications précédentes comportant un enrouleur de câble (6), ledit câble (4) étant apte à être enroulé sur ledit enrouleur de câble (6), l'enrouleur de câble (6) étant rotatif à 360° autour d'un axe de rotation vertical.

5. Robot motorisé selon l'une des revendications précédentes dans lequel ledit connecteur électrique (3) est apte à être couplé à une fiche électrique destinée à être insérée dans une prise d'un réseau électrique.

6. Robot motorisé selon l'une des revendications précédentes comportant un moyen de chargement (7) configuré pour transporter une charge externe audit robot.

7. Robot motorisé selon l'une des revendications précédentes comportant un outil (8).

8. Ensemble comprenant un robot selon l'une des revendications précédentes, et un appareil électrique (5) externe audit robot, ledit appareil électrique (5) étant alimenté en électricité par l'intermédiaire dudit connecteur électrique (3).

9. Procédé d'utilisation d'un robot selon l'une des revendications précédentes, et d'un appareil électrique (5) externe audit robot, par un utilisateur, comportant les étapes suivantes :
- le cas échéant, commande au robot de rejoindre un utilisateur, ou un point cartographié, puis déplacement autonome du robot de façon à rejoindre l'utilisateur, respectivement le point cartographié,
- branchement par l'utilisateur audit connecteur électrique (3) dudit appareil électrique (5),
- utilisation manuelle dudit appareil électrique (5) par l'utilisateur.

10. Procédé selon la revendication précédente, comportant en outre les étapes suivantes :
- commande au robot de suivre ou précéder l'utilisateur,
- déplacement du robot de manière autonome de façon à suivre ou précéder l'utilisateur se déplaçant à pieds.
